# EUROPÄISCHE PATENTSCHRIFT

(11) **EP 2 369 826 B1**
(45) Veröffentlichungstag und Bekanntmachung des Hinweises auf die Patenterteilung: **16.08.2017**
(21) Anmeldenummer: 11002020.3
(22) Anmeldetag: 11.03.2011
(51) Int. Cl.: H04M 7/00, H04M 3/42, H04M 3/51

(54) **VERFAHREN ZUR VERORTUNG UNTER NUTZUNG DER IP-TELEFONIE ABGESETZTER NOTRUFE**
LOCATION METHOD USING EMERGENCY CALLS PLACED USING IP TELEPHONY
PROCÉDÉ DE LOCALISATION EN UTILISANT LES APPELS D'URGENCE ÉMIS PAR TÉLÉPHONIE IP

(30) Priorität: 27.03.2010 DE 102010013136
(43) Veröffentlichungstag der Anmeldung: 28.09.2011
(73) Patentinhaber: Deutsche Telekom AG, 53113 Bonn (DE)
(72) Erfinder: Röbke, Matthias, 50859 Köln (DE); Busch, Dieter, 64372 Ober-Ramstadt (DE)
(74) Vertreter: Nern, Peter-Michael

(56) Entgegenhaltungen:
- EP-A1- 2 106 097
- DE-A1-102006 061 521

## Beschreibung

Die Erfindung betrifft ein Verfahren, welches es ermöglicht, einen Telefonnotruf, der unter Nutzung der IP-Telefonie von einem entsprechenden Endgerät abgesetzt wird, der örtlich zuständigen Notrufabfragestelle zuzuleiten und der betreffenden Notrufabfragestelle Geolokalisationsdaten bereitzustellen, mittels welcher der Ausgangsort des Notrufs bestimmbar ist, so dass die Rettungseinsatzkräfte an diesen Ausgangsort geführt werden können.

In vielen Ländern, so auch in Deutschland, bestehen gesetzliche Regelungen, wonach Telefondienstanbieter sicherstellen müssen, dass Telefonnotrufe der jeweils örtlich zuständigen Notrufabfragestelle zugeleitet und dieser Notrufabfragestelle Informationen zur Verfügung gestellt werden, mit deren Hilfe der Ausgangsort des Notrufs lokalisierbar ist und die Rettungseinsatzkräfte an diesen Ort geführt werden können. Letzteres ist besonders wichtig, im Hinblick auf die Möglichkeit, dass eine einen Notruf absetzende beziehungsweise einleitende Person unter Umständen nicht mehr dazu in der Lage ist, der Notrufabfragestelle, bei welcher der Notruf letztlich aufläuft, Informationen über ihren augenblicklichen Aufenthaltsort zu geben. Man spricht in diesem Zusammenhang auch von so genannten "Röchel-Anrufen", für die dennoch eine Lokalisierung des Anrufers möglich sein muss. In leitungsvermittelten Telefonnetzen herkömmlicher Prägung, das heißt insbesondere im Standard-Festnetz, sind die vorgenannten, sich aus den entsprechenden gesetzlichen Regelungen ergebenden Auflagen vergleichsweise einfach zu erfüllen. Dies hängt damit zusammen, dass ein jeweiliger Telefonanschluss und damit auch die ihm zugeordnete Rufnummer an einen bestimmten Eingangsport der für diesen Telefonanschluss zuständigen Vermittlungsstelle physikalisch fest gekoppelt sind. Über diese physikalische Verkopplung kann der Ausgangspunkt eines Telefonanrufs, so insbesondere auch eines Telefonnotrufs, jederzeit ohne Weiteres ermittelt werden. Dies gilt auch unabhängig davon, dass sich in den letzten Jahren in der Telekommunikation eine zunehmende Arbeitsteilung vollzogen hat, nach welcher in vielen Fällen einerseits zwischen dem Telefondienstanbieter und andererseits zwischen dem Netzbetreiber zu unterscheiden ist, da diese Tatsache nichts an der zuvor erläuterten physikalischen Kopplung zwischen dem Telefonanschluss und dem Port der zugehörigen Vermittlungsstelle ändert.

In der jüngeren Zeit vollzieht sich jedoch ein Übergang von der traditionellen leitungsvermittelten Telekommunikation zur paketvermittelten, auch die sprachbasierte Telefonie einschließenden Datenübertragung, wobei sich dieser Übergang mutmaßlich in naher Zukunft noch beschleunigen wird. Die paketvermittelte Datenübertragung erfolgt über IP-Netze unter Verwendung von IP-Protokollen und IP-Adressen. Entsprechende IP-Adressen sind allen an der Übertragung beteiligten Geräten, nämlich einem Endgerät, welches Daten aussendet oder empfängt, den die Daten übermittelnden beziehungsweise routenden Netzeinrichtungen sowie der jeweiligen Gegenstelle des vorgenannten Endgerätes, das heißt einem ebenfalls Daten sendenden und empfangenden Endgerät zugeordnet, wobei die IP-Adressen zumindest den genannten Endgeräten in der Regel dynamisch zugeteilt werden und die betreffende Zuordnung insoweit nur temporär gültig ist. Dabei erfolgt eine logische Trennung zwischen der Anwendung, so auch der Telefonie, und dem von der Anwendung genutzten physikalischen Netzwerk. Diese logische Trennung basiert auf der Anwendung des TCP/IP-Referenzmodels, nach welchem für eine solche Datenübertragung im Allgemeinen zwischen vier Schichten dieses Models unterschieden wird, wobei die einzelnen Schichten logisch gegeneinander abgeschottet sind. Die Telefonie erfolgt dabei auf der obersten Schicht, der so genannten Anwendungsebene, während die eigentliche physikalische Übertragung der Daten auf der untersten Ebene, in der so genannten physikalischen Schicht, erfolgt.

Aufgrund der zuvor angesprochenen logischen Trennung zwischen den Schichten des Schichtenmodells und ihrer Abschottung untereinander ist es für die IP-Telefonie nicht mehr möglich, ohne Weiteres den geografischen Ort zu bestimmen, von dem aus ein entsprechender Anruf abgesetzt wird. Zwar kennt der Zugangsnetzbetreiber, welcher einen Teil des für die Übertragung genutzten Netzwerks und damit die unteren Schichten gemäß dem Schichtenmodel zur Verfügung stellt, den Zusammenhang zwischen einer IP-Adresse eines Daten sendenden IP-Endgeräts und dem entsprechenden physikalischen Kundenport, jedoch sind diese Informationen dem IP-Telefondienstleister, aufgrund der bereits angesprochenen Abschottung der Schichten untereinander, nicht bekannt. Die Kenntnis des Zusammenhangs zwischen IP-Adresse und physikalischem Port sind für den Zugangsnetzbetreiber erforderlich, damit er die zu übertragenden Daten von dem sendenden Endgerät zu dem für ihren Empfang bestimmten Endgerät routen kann. Jedoch handelt es sich hierbei um sensible Daten, welche aus datenschutzrechtlichen Gründen nicht ohne Weiteres an Dritte weitergegeben werden dürfen.

Bisher diskutierte Ansätze zur Verortung von Notrufen unter Nutzung der IP-Telefonie gehen von einer Nutzung von Datenbanken aus, in denen Datensätze gespeichert sind, welche die Zuordnung zwischen IP-Adresse und jeweiligem physikalischem Port ermöglichen und auf welche für den IP-Telefondienstanbieter ein Zugriff auf der Ebene der Anwendungsschicht gegeben ist. Von diesem Ansatz ausgehende Konzepte unterscheiden sich beispielsweise darin, dass der Zugriff auf die betreffende Datenbank und die Bereitstellung der für die Notrufverortung erforderlichen Informationen ausschließlich durch den Telefondienstanbieter selbst beziehungsweise durch dessen technische Einrichtungen erfolgt oder, dass dem einen Anruf absetzenden IP-Endgerät beim Aufbau einer Verbindung die entsprechenden Informationen über die Datenbank bereitgestellt werden und dieses Endgerät die besagten Informationen stets zusätzlich zu den eigentlichen Nutzdaten selbst mit überträgt. In jedem Falle ergeben sich hierdurch im Grunde noch nicht gelöste datenschutzrechtliche Probleme. Eine entsprechende Lösung für die zuvor geschilderte Vorgehensweise wird beispielsweise in der DE 10 2006 061 521 A1 beschrieben.

Durch die EP 2 106 097 A1 wird ferner eine Lösung zur Bereitstellung eines Notrufservice in einem Peer-to-Peer-Netzwerk (P2P) beschrieben. Gemäß dieser Lösung wird ein Notruf zunächst einer als Look-up register function, bezeichneten Einheit zugeführt. Durch diese wird an das Endgerät eines den Notruf absetzenden Nutzers die IP-Adresse eines Notrufservers übermittelt. Unter Verwendung dieser IP-Adresse wird dann schließlich durch einen P2P-Client des vorgenannten Endgeräts über den Notrufserver ein Call zur Notrufabfragestelle (PSAP) aufgebaut, wobei der Notrufserver bei einem mittels eines mit dem Call übertragenen Identifikators bezeichneten Netzzugangsprovider (NAP) geolokale Daten zum Ursprung des Notrufs ermittelt und an die PSAP übermittelt.

Hierbei ist es als Nachteil anzusehen, dass der vorgenannte Call zur PSAP durch den P2P-Client des zur Absetzung des Notrufs verwendeten Endgerätes selber aufgebaut wird. Da ein Datenaustausch zwischen den Interfaces von Nutzerendgeräten und Interfaces von Netz- und/oder Zugangsprovidern, anders als ein ausschließlich über Interfaces von Einrichtungen der Provider geführter Datenaustausch, regelmäßig nicht als vertrauenswürdig angesehen wird, weil der tatsächliche Nutzer verschleiert sein könnte, stellt dies einen Bruch der Vertrauenskette dar. In Abhängigkeit von den jeweiligen gesetzlichen Bestimmungen ist aber ein solcher Bruch der Vertrauenskette in einigen Staaten unzulässig beziehungsweise für die Provider problematisch. So ist beispielsweise in Deutschland per Gesetz jeweils der Netzbetreiber dafür verantwortlich, dass ein Notruf der tatsächlich lokal zuständigen Notrufabfragestelle zugeführt wird und an diese zutreffende lokale Angaben zum Ursprung des Notrufs übermittelt werden.

Aufgabe der Erfindung ist es, eine Lösung zur Verortung unter Nutzung der IP-Telefonie abgesetzter Notrufe zur Verfügung zu stellen, welche einerseits den datenschutzrechtlichen Anforderungen gerecht wird und andererseits sicherstellt, dass der Notruf der örtlich tatsächlich zuständigen Notrufabfragestelle unter Aufrechterhaltung der Vertrauenskette zugeleitet wird und an die Notrufabfragestelle zuverlässige Angaben zum Ursprung des Notrufs übermittelt werden. Hierbei soll die betreffende Lösung nur minimale technische Eingriffe in die bestehende Struktur von IP-Netzwerken erfordern.

Die Aufgabe wird durch ein Verfahren mit den Merkmalen des Hauptanspruchs gelöst. Vorteilhafte Aus- beziehungsweise Weiterbildungen der Erfindung sind durch die Unteransprüche gegeben.

Entsprechend der gestellten Aufgabe wird nach dem vorgeschlagenen Verfahren ein IP-basierter Notruf, welcher unter Nutzung eines von einem IP-Telefondienstanbieter bereitgestellten IP-Telefondienstes eingeleitet wird und daher zunächst auf einer Sprachdienstplattform des betreffenden IP-Telefondienstanbieters (erste Sprachdienstplattform) aufläuft, einer örtlich zuständigen Notrufabfragestelle zugeleitet. Dabei werden der betreffenden Notrufabfragestelle Geolokalisationsdaten zur Verfügung gestellt, mittels welcher der Ausgangsort des Telefon-Notrufs zur Leitung der Rettungseinsatzkräfte bestimmbar ist. Dies geschieht erfindungsgemäß wie im Folgenden dargestellt.

Zunächst wird ein jeder auf der (ersten) Sprachdienstplattform auflaufende Anruf darauf überprüft, ob es sich bei ihm um einen Notruf handelt. Dies geschieht anhand der Zielrufnummer des jeweiligen Anrufs. Beispielsweise in Deutschland, den Ländern der Europäischen Union und auch in einigen weiteren europäischen Ländern gilt bekanntermaßen die einheitliche zentrale Notrufnummer 112. Diese zentrale Notrufnummer ist unabhängig von der Art des für einen Anruf verwendeten Zugangsnetzes gültig und gilt somit nicht nur Im Telefonfestnetz, sondern gleichermaßen für die IP-basierte Telefonie beziehungsweise die Internettelefonie. Mithin ist auch bei einem unter Nutzung der IP-Telefonie eingeleiteten Anruf anhand der Zielrufnummer immer erkennbar, ob es sich bei dem betreffenden Anruf um einen Notruf handelt.

Sofern es sich demgemäß entsprechend der Zielrufnummer nun bei einem auf der Sprachdienstplattform des IP-Telefondienstanbieters auflaufenden Anruf nicht um einen Notruf handelt, wird der betreffende, IP-basierte Anruf dem vorgeschlagenen Verfahren zufolge unmittelbar zu dem angerufenen, durch die Zielrufnummer bestimmten Teilnehmer geroutet. Das Routing zu dem angerufenen Teilnehmer kann dabei in bekannter Weise gegebenenfalls über Gateways erfolgen, welche unterschiedlich strukturierte Netze (wie ein IP-Netz einerseits und ein Netz der leitungsvermittelten Telefonie andererseits) miteinander verknüpfen und die übertragenen Daten in das Datenformat des jeweils anderen Netzes konvertieren.

Handelt es sich hingegen bei der Zielrufnummer des jeweiligen durch die Sprachdienstplattform des IP-Telefondienstanbieters diesbezüglich untersuchten, IP-basierten Anrufs um eine zentrale Notrufnummer, so wird der betreffende, folglich als Notruf anzusehende Anruf an einen der (ersten) Sprachdienstplattform zugeordneten, zur Behandlung von Notrufen ausgebildeten Notruf-Anwendungsserver (erster Notruf-Anwendungsserver) weitergeleitet. Durch diesen (ersten) Notruf-Anwendungsserver wird die IP-Quelladresse des als Notruf erkannten Anrufs darauf überprüft wird, ob sie zu einem von dem Betreiber der zugehörigen Sprachdienstplattform verwalteten und somit von diesem Notruf-Anwendungsserver kontrollierten IP-Adressbereich gehört. Ist dies der Fall, wird der Notruf unmittelbar und Notrufabfragestelle zugeleitet, welche bezüglich dieses, von dem Notruf-Anwendungsserver kontrollierten Adressbereichs örtlich zuständig ist. Dabei ist die für den besagten IP-Adressbereich örtlich zuständige Notrufabfragestelle dem Notruf-Anwendungsserver aufgrund dessen, dass es sich, wie ausgeführt, um einen von diesem Notruf-Anwendungsserver selbst kontrollierten IP-Adressbereich handelt, bekannt oder für ihn ermittelbar. Im erstgenannten Fall kann die Notrufabfragestelle dem Notruf-Anwendungsserver beispielsweise aufgrund eines entsprechenden, auf dem betreffenden Server selbst gehaltenen Datenbankeintrags bekannt sein. Denkbar ist es aber auch, dass sie für den Notruf-Anwendungsserver durch Zugriff auf eine zentrale Instanz, in Deutschland beispielsweise durch Zugriff auf Einheiten der Bundesnetzagentur, ermittelbar ist. Mischformen sind insoweit denkbar, als dass im Falle des erstgenannten Datenbankeintrags auf dem Server selbst, die Pflege beziehungsweise die Aktualisierung der betreffenden Datenbank manuell oder im Wege eines periodischen Updates unter Rückgriff auf den Datenbestand beispielsweise der Bundesnetzagentur erfolgen kann.

Ist die IP-Quelladresse dem Notruf-Anwendungsserver hingegen nicht bekannt, gehört also zu einem von diesem nicht verwalteten beziehungsweise kontrollierten IP-Adressbereich, übergibt er den Notruf der Sprachdienstplattform eines anderen Zugangsnetzbetreibers, welcher den die IP-Quelladresse umfassenden Adressbereich vermeintlich verwaltet. Letzteren ermittelt er anhand der IP-Quelladresse, wobei es hierfür, wie noch auszuführen sein wird, unterschiedliche Möglichkeiten gibt. Jedoch kann es sich bei dem dabei ermittelten Zugangsnetzbetreiber unter Umständen doch noch nicht um denjenigen Provider handeln, über dessen Zugangsnetz der Notruf geroutet wurde, nämlich etwa dann, wenn dieser den Adressbereich, in welchen die IP-Quelladresse fällt, über die er von dem vorgenannten Notruf-Anwendungsserver ermittelt wurde, gewissermaßen untervermietet, hat, also einem anderen Netzbetreiber zur wirtschaftlichen Nutzung überlassen hat. Daher wurde vorstehend von dem "vermeintlich" zuständigen Zugangsnetzbetreiber gesprochen. Nach dem Eingang des Notrufs auf dieser Sprachplattform des betreffenden Zugangsnetzbetreibers vollzieht sich der zuvor beschriebene Ablauf (Überprüfen der Zielrufnummer, Überprüfen der IP-Quelladresse und gegebenenfalls Weiterleitung des Notrufs an einen weiteren Zugangsnetzbetreiber) erneut. Die letztgenannte Sprachdienstplattform ist dabei nicht dieselbe, wie die, bei welcher der Notruf zuerst aufgelaufen war, ist aber von ihrer Funktion her gleich und ebenfalls mit einem zugehörigen Notruf-Anwendungsserver in eine Wirkverbindung gebracht. Daher werden/wurden beide Netzeinheiten im Kontext dieser Erläuterungen gleichermaßen mit "Sprachdienstplattform" bezeichnet wobei erstere zur Verdeutlichung beziehungsweise Unterscheidung auch als "erste Sprachdienstplattform" und die danach angesprochene Sprachdienstplattform auch als "zweite Sprachdienstplattform" bezeichnet wurde beziehungsweise wird.

Sofern schließlich der Notruf-Anwendungsserver eines Zugangsnetzbetreibers feststellt, dass die IP-Quelladresse des Notrufs in einen von ihm verwalteten IP-Adressbereich fällt, leitet er den Notruf der für diesen IP-Adressbereich örtlich zuständigen (ihm bekannten) Notrufabfragestelle zu. Ferner löst er die IP-Quelladresse auf und ermittelt anhand der ihm für das Routing notwendigerweise zur Verfügung stehenden Zugangsdaten den Ausgangsort des Telefonnotrufs, beziehungsweise diesen Ausgangsort beschreibende Geolokalisationsdaten. Im letzten Schritt werden schließlich die ermittelten Geolokalisationsdaten an die örtlich zuständige Notruf-Annahmestelle übermittelt, in dem diese den IP-Datenpaketen des als Notruf identifizierten Anrufs hinzugefügt werden.

Das erfindungsgemäße Verfahren geht von der grundsätzlichen Überlegung aus, dass eine IP-Adresse in einem Adressraum immer eindeutig ist und damit auch stets einem physikalischen Anschluss beziehungsweise Port zugeordnet werden kann. Weiterhin geht das Verfahren davon aus, dass die Informationen für eine solche Zuordnung, das heißt der Zuordnung zwischen einer logischen IP-Adresse und einer physikalischen Adresse, also dem Anschluss beziehungsweise Port, beim jeweiligen Zugangsnetzbetreiber vorhanden sind. Denn nur aufgrund dieser Kenntnis ist es dem Zugangsnetzbetreiber möglich, die von einem Endgerät eines Kunden ausgesandten IP-Pakete zu einem jeweils vorgesehenen Empfänger zu routen und umgekehrt für das Endgerät des betreffenden Kunden bestimmte IP-Pakete anhand der IP-Adresse über den damit korrespondierenden physikalischen Anschluss zum IP-Endgerät des Kunden zu routen. Folglich wird entsprechend dem erfindungsgemäßen Verfahren die Lokalisierung einer den Notruf absetzenden Person beziehungsweise des von dieser Person dafür genutzten physikalischen Anschlusses von dem IP-Telefondienstanbieter beziehungsweise durch die von ihm genutzten Netzeinheiten (Sprachdienstplattform mit zugehörigem Notruf-Anwendungsserver) gewissermaßen auf den Zugangsnetzbetreiber delegiert. Dabei gehen die vorstehenden Darstellungen von einer Konstellation, bei welcher ein IP-Telefondienstanbieter gleichzeitig auch als Zugangsnetzbetreiber fungiert beziehungsweise ein Zugangsnetzbetreiber mindestens eine physische Einheit unterhält, auf welcher IP-Telefondienstanbieter ihre Dienste durch Einrichtung entsprechender logischer Plattformen erbringen, so dass diese Einheit beziehungsweise ein in entsprechender Weise logisch genutzter Teil dieser Einheit im Sinne des erfindungsgemäßen Verfahrens als Sprachdienstplattform zu bezeichnen ist. Darüber hinaus ist es durchaus bekannt und auch üblich ist, dass die beiden vorgenannten Funktionen (IP-Telefondienstanbieter und Zugangsnetzbetreiber) durch einen Betreiber realisiert beziehungsweise die entsprechenden Dienstleistungen durch einen Betreiber erbracht werden. In diesem Fall verfügt der entsprechende Betreiber ohnehin auch über einen von ihm selbst verwalteten IP-Adressbereich eines Zugangsnetzes, so dass er dann, sofern die IP-Quelladresse des Notrufs zu diesem IP-Adressbereich gehört, diese IP-Quelladresse auch selbst unmittelbar anhand der ihm dazu in seiner Funktion als Zugangsnetzbetreiber vorliegenden Informationen auflösen kann. Das heißt, es ist dem gleichzeitig als IP-Telefondienstanbieter und als Zugangsnetzbetreiber fungierenden Betreiber mittels der für den Netzzugang benutzten Zugangseinrichtungen möglich, anhand der dem jeweiligen Kunden beziehungsweise der den Notruf absetzenden Person, genauer gesagt seinem dafür benutzten Endgerät, beim Zugang zu dem IP-Netz dynamisch zugeteilten IP-Nummer die geografischen Daten des zugehörigen physikalischen Anschlusses zu bestimmen.

Das Verfahren beruht demnach auf einer Zusammenführung der Mechanismen des IP-Routings und des IP-Telefoniedienstes und ermöglicht somit gewissermaßen einen transparenten Zugriff auf die physikalischen Adressinformationen über mehrere Protokollschichten des TCP/IP-Referenzmodels hinweg. Die Zusammenführung dieser Mechanismen erfolgt dabei, wie aus den vorstehenden Erläuterungen hervorgeht, mit Hilfe eines einer jeweiligen Sprachdienstplattform zugeordneten Notruf-Anwendungsservers. Dabei liegt der Vorteil des Verfahrens darin, dass die über diesen transparenten Zugriff ermittelten Lokalisiationsdaten nur zwischen dem jeweiligen Zugangsnetzbetreiber und der nach dem Verfahren ermittelten, örtlich zuständigen Notrufabfragestelle ausgetauscht werden und das auch nur im Falle eines tatsächlich vorliegenden Notrufs. Damit wird in höchstem Maße dem Bundesdatenschutzgesetz entsprochen, zu dessen Intentionen die Datenvermeidung, das heißt die Vermeidung einer unnötigen Erhebung von Daten, und die Datensparsamkeit im Sinne eines auf das Notwendigste beschränkten Datenaustausches gehören.

Je nach Ausgestaltung des erfindungsgemäßen Verfahrens können die durch den jeweils zuständigen Zugangsnetzbetreiber ermittelten Geolokalisationsdaten der als örtlich zuständig bestimmten Notrufabfragestelle, welcher der jeweilige Notruf zugeleitet wird, unmittelbar mit dem den Anruf einleitenden Verbindungswunsch beziehungsweise mit dem darauf folgenden Verbindungsaufbau übergeben werden oder aber, entsprechend einer möglichen Ausgestaltung, erst auf Anfrage an die Notrufabfragestelle übermittelt werden. Die Ermittlung eines vermeintlich zuständigen Zugangsnetzbetreibers im Falle dessen, dass die IP-Quelladresse nicht von dem jeweiligen IP-Telefondienstanbieter beziehungsweise dem seiner Sprachdienstplattform zugeordneten Notruf-Anwendungsserver selbst verwaltet wird, erfolgt vorzugsweise im Wege eines Reverse-DNS-Lookup. Beispielsweise spricht der Notruf-Anwendungsserver hierfür eine spezielle, für das Reverse-DNS angelegte Domain, wie beispielsweise die in-addr.arpa-Domain auf einem Server des Domain-Name-Systems an. Eine alternative, ebenfalls vorgesehene Möglichkeit besteht darin, den entsprechenden Zugangsnetzbetreiber über eine so genannten Whois-Abfrage bei einem Whois-Server oder bei einem Server einer Internet-Domain-Vergabe- beziehungsweise -Registrierungsstelle, wie zum Beispiel RIPE, zu ermitteln.

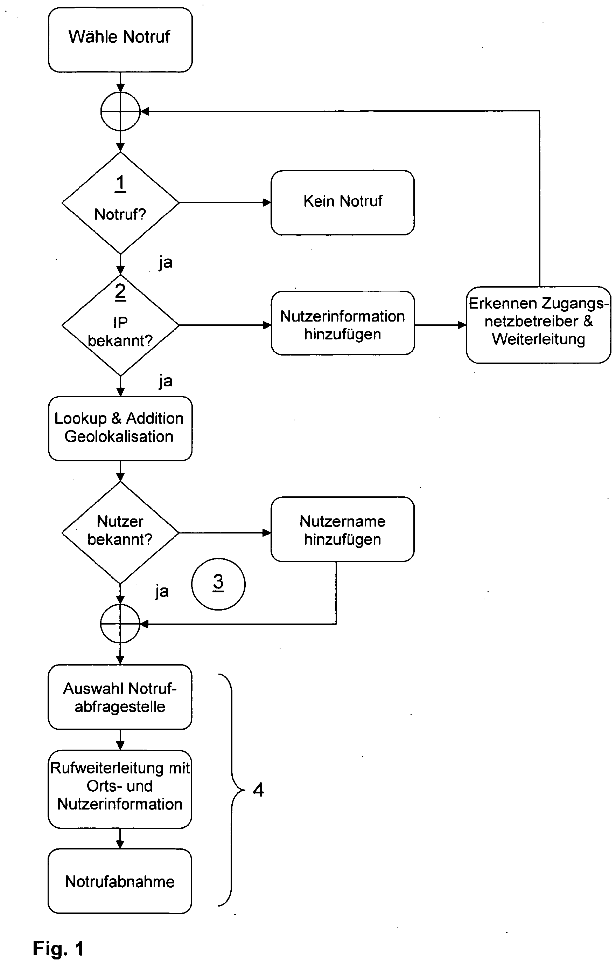

Der Ablauf des erfindungsgemäßen Verfahrens soll nochmals kurz anhand des in der Fig. 1 dargestellten Ablaufschemas skizziert werden.

Demnach vollzieht sich folgender Ablauf: Durch einen Nutzer der IP-Telefonie wird ein Anruf unter Angabe der Zielrufnummer eingeleitet. Der Anruf läuft bei der Sprachdienstplattform eines IP-Telefondienstanbieters auf. Auf dieser Plattform wird geprüft, ob es sich bei der Zielrufnummer dieses Anrufs um eine zentrale Notrufnummer handelt (1). Ist dies nicht der Fall, so wird der Anruf entsprechend dem Nein-Zweig des dargestellten Schemas als normaler Anruf behandelt und über entsprechende Netzwerkeinheiten zum Endgerät des angerufenen Teilnehmers geroutet (nicht dargstellt). Im anderen Falle, wenn es sich also bei dem Anruf um einen Notruf handelt (Ja-Zweig), wird dieser an einen der Sprachdienstplattform zugeordneten Notruf-Anwendungsserver übergeben. Von diesem Notruf-Anwendungsserver wird geprüft, ob es sich bei der IP-Quelladresse des Anrufs um eine von dem Notruf-Anwendungsserver selbst kontrollierte, das heißt von dem IP-Telefondienstanbieter selbst verwaltete IP-Adresse handelt (2). Ist dies nicht der Fall, so wird von dem Notruf-Anwendungsserver, beispielsweise durch Nutzung des Reverse-DNS-Lookup, der diese vermeintlich verwaltende Zugangsnetzbetreiber ermittelt und der Notruf dessen Sprachdienstplattform zugeleitet, wobei die Datenpakete noch um dem IP-Telefondienstanbieter bekannte, den Anrufer betreffende Nutzerinformationen ergänzt wird. Die vorgenannten Schritte (1) und (2), wonach diese Sprachdienstplattform feststellt, ob es sich um einen Notruf handelt und den Anruf, sofern dies gegeben ist, an einen ihr zugeordneten Notruf-Anwendungsserver zur Prüfung der IP-Quelladresse übergibt, werden erneut durchlaufen. Hierbei ist anzumerken, dass es sich im Falle des nochmaligen Durchlaufens der genannten Schleife bei der Sprachdienstplattform, welche die Zielrufnummer auf das Vorliegen eines Notruf überprüft, und bei dem Notruf-Anwendungsserver, welcher die Herkunft der IP-Quelladresse überprüft, um Einheiten handelt, welche nicht identisch sind mit der ersten Sprachdienstplattform, bei welcher der Notruf zunächst aufläuft, beziehungsweise mit dem dieser Plattform zugeordneten Notruf-Anwendungsserver.

Im Allgemeinen wird im Zuge des zweiten Durchlaufs der zuvor erläuterten Schleife eine Auflösung der IP-Adresse und somit das Routing des Notrufs zu der örtlich zuständigen Notrufabfragestelle unter unmittelbarer oder nachfolgender Übermittlung von Geolokalisationsdaten möglich sein (3). Jedoch kann es sein - und insoweit wurde vorliegend stets von dem den Adressbereich mit der IP-Quelladresse vermeintlich verwaltenden Zugangsnetzbetreiber gesprochen - dass der zunächst ermittelte Zugangsnetzbetreiber den zu seiner Ermittlung führenden Adressbereich beziehungsweise die in diesem IP-Adressbereich gelegene IP-Adresse insoweit nicht wirklich selbst verwaltet, als er den betreffenden IP-Adressbereich an einen Sub-Dienstleister gewissermaßen untervermietet hat. In diesem Falle würde dann die vorgenannte Schleife mit den Schritten (1) und (2) gegebenenfalls ein drittes Mal durchlaufen werden müssen. Sofern es sich bei dem im Zuge des Abarbeitens der Schleife jeweils ermittelten Zugangsnetzbetreiber um einen Zugangsnetzbetreiber handelt, welcher selbst nicht über eine eigene Sprachdienstplattform verfügt (zum Beispiel reiner DSL-Anbieter), so kann diese Funktion, also das Betreiben einer entsprechenden Plattform mit zugeordnetem Notruf-Anwendungsserver, an einen so genannten Trusted-Partner übertragen werden, welcher dann gewissermaßen als neutraler Mediator zwischen einem Sprachdienstanbieter und dem reinen Verbindungsnetzbetreiber fungiert, aber im Kontext dieser Darstellungen einschließlich seiner Netzwerkeinrichtungen als Teil des Zugangsnetzbetreibers betrachtet werden soll.

Sobald schließlich der physikalische Anschluss zu der IP-Quelladresse und mit diesem die örtlich zuständige Notrufabfragestelle ermittelt ist, wird der um die entsprechenden Geolokalisationsdaten ergänzte Notruf, wie in dem Schema gemäß Fig. 1 gezeigt, der demgemäß örtlich zuständigen Notrufabfragestelle zugeleitet (4). Im Zusammenhang mit der Zuleitung des Notruf zur zuständigen Notrufabfragestelle wird den mit dem Verbindungswunsch oder den mit dem eigentlichen Anruf übertragenen Datenpaketen durch den die IP-Quelladresse letztlich auflösenden Server des entsprechenden Zugangsnetzbetreibers noch eine bei diesem vorliegende Information über den Namen des Anrufers, genauer gesagt, über den Namen des Inhabers des für den Notruf genutzten Zugangs, hinzugefügt (3). Diese Information und die für den Einsatz der Rettungskräfte nötigen, aus den ermittelten Geolokalisationsdaten gewonnenen geografischen Koordinaten werden der örtlich zuständigen Notrufabfragestelle zur Verfügung gestellt (4). Dies kann unmittelbar im Zusammenhang mit der Zuleitung des Notrufs an diese Notrufabfragestelle geschehen oder aber gegebenenfalls auch erst auf entsprechende Rückfrage durch die Notrufabfragestelle.

## Patentansprüche

1. Verfahren zur Verortung IP-basierter Notrufe, nach welchem ein unter Nutzung eines von einem IP-Telefondienstanbieter bereitgestellten IP-Telefondienstes eingeleiteter, an eine zentrale Notrufnummer gerichteter Notruf, welcher als Untermenge aller unter Nutzung desselben IP-Telefondienstes eingeleiteter Anrufe zunächst auf einer ersten Sprachdienstplattform, nämlich einer Sprachdienstplattform des betreffenden IP-Telefondienstanbieters aufläuft, einer örtlichen zuständigen Notrufabfragestelle zugeleitet und dieser Notrufabfragestelle Geolokalisationsdaten zur Verfügung gestellt werden, mittels welcher der Ausgangsort des Telefon-Notrufs zur Leitung der Rettungseinsatzkräfte bestimmbar ist,
**gekennzeichnet, durch** die Verfahrensschritte
a) Überprüfen jedes auf der Sprachdienstplattform auflaufenden Anrufs darauf, ob dessen Zielrufnummer eine zentrale Notrufnummer ist und,
i. Routen des Anrufs unmittelbar zu dem angerufenen, durch die Zielrufnummer bestimmten Teilnehmer, sofern es sich bei der Zielrufnummer nicht um eine zentrale Notrufnummer handelt
oder
ii. Weiterleitung des Anrufs an einen der Sprachdienstdienstplattform zugeordneten, zur Behandlung von Notrufen ausgebildeten Notruf-Anwendungsserver durch die Sprachdienstplattform, sofern es sich bei der Zielrufnummer um eine zentrale Notrufnummer handelt,
b) Überprüfen der IP-Quelladresse eines als Notruf erkannten Anrufs durch den betreffenden Notruf-Anwendungsserver darauf, ob sie zu einem von dem Betreiber der zugehörigen Sprachdienstplattform verwalteten und somit von diesem Notruf-Anwendungsserver kontrollierten IP-Adressbereich gehört und,
i. sofern die IP-Quelladresse zu dem betreffenden IP-Adressbereich gehört, Zuführung des Notrufs zu der, bezüglich des von dem Notruf-Anwendungsserver kontrollierten IP-Adressbereichs örtlich zuständigen Notrufabfragestelle, deren Zieladresse oder lokale Rufnummer dem Notruf-Anwendungsserver bekannt oder für ihn ermittelbar ist
oder,
ii. sofern die IP-Quelladresse nicht zu dem betreffenden IP-Adressbereich gehört, Ermittlung eines Zugangsnetzbetreibers, welcher den die IP-Quelladresse umfassenden Adressbereich vermeintlich verwaltet, Zuführung des Notrufs zu einer Sprachdienstplattform dieses Zugangsnetzbetreibers, welcher ebenfalls ein Notruf-Anwendungsserver zugeordnet ist, und Wiederholung der Verfahrensschritte a) und b) bis zur Zuführung des Notrufs zu der für die IP-Quelladresse örtlich zuständigen Notrufabfragestelle,
c) Auflösen der IP-Quelladresse und Ermittlung den Ausgangsort des Telefon-Notrufs beschreibender Geolokalisationsdaten, durch den jeweiligen, den Notruf der örtlich zuständigen Notrufabfragestelle zuleitenden Notruf-Anwendungsserver,
d) Hinzufügen der Geolokalisationsdaten zu den, mit dem als Notruf identifizierten Anruf an die örtlich zuständige Notrufabfragestelle übermittelten IP-Paketen.

2. Verfahren nach Anspruch 1, **dadurch gekennzeichnet, dass** das Hinzufügen der Geolokalisationsdaten zu den IP-Paketen des Anrufs gemäß Verfahrensschritt d) erst auf Anforderung durch die Notrufabfragestelle erfolgt.

3. Verfahren nach Anspruch 1 oder 2, **dadurch gekennzeichnet, dass** die Ermittlung des Zugangsnetzbetreibers gemäß Verfahrensschritt b) ii im Wege des Reverse-DNS-Lookup erfolgt.

4. Verfahren nach Anspruch 1 oder 2, **dadurch gekennzeichnet, dass** die Ermittlung des Zugangsnetzbetreibers gemäß Verfahrensschritt b) ii im Wege einer WHOIS-Anfrage bei einem WHOIS-Server oder bei einem Server einer Internet-Domain-Vergabestelle erfolgt.

## Claims

1. Method for locating IP-based emergency calls, by means of which an emergency call directed to a central emergency call number initiated using an IP telephone service provided by an IP telephone service provider which initially arrives as a sub-quantity of all calls initiated using the same IP telephone service at a first voice service platform, namely a voice service platform of the relevant IP telephone service provider, is directed to a locally responsible public safety answering point and this public safety answering point is provided with geo-localisation data by means of which the initial location of the telephone emergency call can be determined in order to direct the emergency services,
**characterised by** the following steps:
a) checking every call arriving at the voice service platform to ascertain whether its destination call number is a central emergency call number and
i. routing the call directly to the called subscriber determined by the destination call number if the destination call number is not a central emergency call number,
or
ii. forwarding of the call by the voice service platform to an emergency call application server co-operating with the voice service platform and configured to handle emergency calls if the destination call number is a central emergency call number,
b) checking the IP source address of a call recognised as being an emergency call by the relevant emergency call application server to ascertain whether it belongs to an IP address range managed by the operator of the associated voice service platform and hence controlled by this emergency call application server, and
i. if the IP source address belongs to the relevant IP address range, directing the emergency call to the public safety answering point locally responsible for the IP address range controlled by the emergency call application server, the destination address or local call number of which is known to the emergency call application server or can be determined by it,
or
ii. if the IP source address does not belong to the relevant IP address range, determining an access network operator which purportedly manages the address range covering the IP source address, directing the emergency call to a voice service platform of this access network operator which is likewise assigned an emergency call application server and repeating method steps a) and b) until the emergency call is directed to the public safety answering point locally responsible for the IP source address,
c) resolving the IP source address and determining geo-localisation data describing the initial location of the telephone emergency call by means of the respective emergency call application server directing the emergency call to the locally responsible public safety answering point,
d) adding the geo-localisation data to the IP packets transmitted with the call to the locally responsible public safety answering point identified as an emergency call.

2. Method as claimed in claim 1, **characterised in that** the geo-localisation data is not added to the IP packets of the call according to method step d) until requested by the public safety answering point.

3. Method as claimed in claim 1 or 2, **characterised in that** the access network operator is determined according to method step b) ii by reverse DNS lookup.

4. Method as claimed in claim 1 or 2, **characterised in that** the access network operator is determined according to method step b) ii by means of a WHOIS request to a WHOIS server or to a server of an internet domain registry.

## Revendications

1. Procédé de localisation d'appels d'urgence basés sur IP, selon lequel un appel d'urgence adressé à un numéro d'appel d'urgence central, initié en utilisant un service de téléphonie IP mis à disposition par un fournisseur de service de téléphonie IP, appel d'urgence qui aboutit tout d'abord sur une première plate-forme de service vocal, à savoir une plate-forme de service vocal du fournisseur de service de téléphonie IP concerné en tant que sous-ensemble de tous les appels initiés en utilisant le même service de téléphonie IP, est acheminé à un poste d'interrogation d'appel d'urgence localement compétent et des données de géolocalisation sont mises à disposition de ce poste d'interrogation d'appel d'urgence, au moyen desquelles le lieu d'origine de l'appel d'urgence téléphonique peut être déterminé en vue de guider les personnels de secours,
**caractérisé par** les étapes suivantes :
a) contrôle de chaque appel aboutissant sur la plate-forme de service vocal afin de vérifier si son numéro d'appel destinataire est un numéro d'appel d'urgence central et
i. routage de l'appel directement à l'abonné appelé, déterminé par le numéro d'appel destinataire, dans la mesure où le numéro d'appel destinataire n'est pas un numéro d'appel d'urgence central ou
ii. transfert par la plate-forme de service vocal de l'appel à un serveur d'application d'appel d'urgence associé à la plate-forme de service vocal et configuré pour traiter les appels d'urgence, dans la mesure où le numéro d'appel destinataire est un numéro d'appel d'urgence central,
b) contrôle de l'adresse source IP d'un appel reconnu comme appel d'urgence par le serveur d'application d'appel d'urgence concerné afin de vérifier si elle fait partie d'une plage d'adresses IP gérée par l'exploitant de la plate-forme de service local associée et ainsi contrôlée par ce serveur d'application d'appel d'urgence et
i. dans la mesure où l'adresse source IP fait partie de la plage d'adresses IP concernée, acheminement de l'appel d'urgence au poste d'interrogation d'appel d'urgence localement compétent par rapport à la plage d'adresses IP contrôlée par le serveur d'application d'appel d'urgence, dont l'adresse destinataire ou le numéro d'appel local est connu(e) du serveur d'application d'appel d'urgence ou peut être déterminé(e) pour lui
ou
ii. dans la mesure où l'adresse source IP ne fait pas partie de la plage d'adresses IP concernée, détermination d'un exploitant de réseau d'accès qui est supposé gérer la plage d'adresses comprenant l'adresse source IP, acheminement de l'appel d'urgence à une plate-forme de service vocal de cet exploitant de réseau d'accès à laquelle est également associé un serveur d'application d'appel d'urgence, et répétition des étapes a) et b) du procédé jusqu'à l'acheminement de l'appel d'urgence au poste d'interrogation d'appel d'urgence localement compétent pour l'adresse source IP,
c) résolution de l'adresse source IP et détermination des données de géolocalisation qui décrivent le lieu d'origine de l'appel d'urgence téléphonique par le serveur d'application d'appel d'urgence respectif qui achemine l'appel d'urgence au poste d'interrogation d'appel d'urgence localement compétent,
d) ajout des données de géolocalisation à l'appel identifié comme appel d'urgence aux paquets IP communiqués au poste d'interrogation d'appel d'urgence localement compétent.

2. Procédé selon la revendication 1, **caractérisé en ce que** l'ajout des données de géolocalisation aux paquets IP de l'appel selon l'étape d) du procédé s'effectue uniquement sur demande par le poste d'interrogation d'appel d'urgence.

3. Procédé selon la revendication 1 ou 2, **caractérisé en ce que** la détermination de l'exploitant de réseau d'accès selon l'étape b) ii. du procédé s'effectue au moyen de la recherche DNS inversée.

4. Procédé selon la revendication 1 ou 2, **caractérisé en ce que** la détermination de l'exploitant de réseau d'accès selon l'étape b) ii. du procédé s'effectue au moyen de l'interrogation WHOIS auprès d'un serveur WHOIS ou auprès d'un serveur d'un organisme d'attribution de domaine Internet.
